# EUROPÄISCHE PATENTSCHRIFT

(11) **EP 3 933 191 B1**
(45) Veröffentlichungstag und Bekanntmachung des Hinweises auf die Patenterteilung: **19.11.2025**
(21) Anmeldenummer: 21183319.9
(22) Anmeldetag: 02.07.2021
(51) Int. Cl.: F03D 7/02

(54) **WINDENERGIEANLAGE UND VERFAHREN ZUM BETREIBEN EINER WINDENERGIEANLAGE**
WIND ENERGY SYSTEM AND METHOD FOR OPERATING A WIND ENERGY SYSTEM
ÉOLIENNE ET PROCÉDÉ DE FONCTIONNEMENT D'UNE ÉOLIENNE

(30) Priorität: 03.07.2020 DE 102020004034; 03.07.2020 DE 102020004035; 03.07.2020 DE 102020004036
(43) Veröffentlichungstag der Anmeldung: 05.01.2022
(73) Patentinhaber: Siemens Gamesa Renewable Energy Service GmbH, 20097 Hamburg (DE)
(72) Erfinder: HÖR, Oliver, 24796 Bredenbek (DE); BEHL, Stefan, 24536 Neumünster (DE); WARFEN, Karsten, 23795 Weede/Söhren (DE)
(74) Vertreter: Schlotter, Alexander Carolus Paul

(56) Entgegenhaltungen:
- EP-A1- 2 189 655
- DE-A1- 102010 016 105
- DE-A1- 102012 101 484
- GB-A- 2 545 719

## Beschreibung

Die vorliegende Erfindung betrifft eine Windenergieanlage, ein Verfahren zum Betreiben einer Windenergieanlage sowie ein Computerprogrammprodukt zur Durchführung des Verfahrens.

Aus betriebsinterner Praxis sind Windenergieanlagen mit winkelverstellbaren Rotorblättern bekannt.

Indem die Rotorblätter in eine Fahnenstellung verstellt werden, in der sie, wenigstens im Wesentlichen, keine Leistung an eine Rotor-Drehachse bzw. -nabe erzeugen, kann insbesondere eine Leistung der Windenergieanlage geregelt und/oder eine Belastung bei (zu) starkem Wind reduziert werden.

Im Normalbetrieb werden Verstellantriebe zum Verstellen der Rotorblätter aus einer Energiequelle, beispielsweise elektromotorische Verstellantriebe aus einem (Strom)Netz oder hydraulische Verstellantriebe aus einem Hydrauliksystem, mit (Antriebs)Energie versorgt.

Aus betriebsinterner Praxis ist es bekannt, bei Ausfall dieser primären Energieversorgung in einem Sonderbetrieb Verstellantriebe stattdessen mit einem Energiespeicher, beispielsweise elektromotorische Verstellantriebe mit einem Akkumulator oder hydraulische Verstellantriebe mit einem (Hydraulik)Druckspeicher, zu verbinden, so dass diese ungeregelt, aber sicher in die Fahnenstellung gedreht werden.

Bei Erreichen der Fahnenstellung wird diese Energieversorgung aus dem Energiespeicher abgeschaltet bzw. unterbrochen, beispielsweise bei elektromotorischen Verstellantrieben durch ein Schütz oder bei hydraulischen Verstellantrieben durch ein selbsttätiges Schaltventil. Bei hydraulischen Verstellzylindern als Antrieb kann die Fahnenstellung auch durch einen mechanischen Endanschlag begrenzt sein.

Auf diese Weise können die Rotorblätter bei Ausfall der Energieversorgung aus der Energiequelle in einfacher und damit verlässlicher Weise in ihre Fahnenstellung gedreht, insbesondere dort diese Verstellung (verlässlich) beendet werden.

Die DE 10 2010 016 105 A1 betrifft eine notbetriebsfähige Pitchantriebsvorrichtung zur Verstellung eines Rotorblattpitches einer Wind- oder Wasserkraftanlage, wobei die Pitchantriebsvorrichtung einen Drehstrom-IPM-Synchronmotor, eine Wechselrichtereinrichtung und eine elektrische Gleichspannungs-Energiespeichereinrichtung umfasst, wobei zumindest für einen Notbetrieb die Gleichspannungs-Energiespeichereinrichtung im wesentlichen unmittelbar an einen Gleichspannungs-Zwischenkreis zwischen einer Gleichrichtereinrichtung und der Wechselrichtereinrichtung (14) zur zumindest kurzfristigen Energieversorgung des Synchronmotors geschaltet ist, so dass der IPM-Synchronmotor bei einer absinkenden Zwischenkreisspannung zumindest kurzfristig drehzahlgeregelt betrieben werden kann, wobei ein drehzahlgesteuerter Notbetrieb der Pitchantriebsvorrichtung bei einer im Notbetrieb sinkenden Zwischenkreisspannung mit hohem Drehmoment ermöglicht wird, wobei die Gleichspannungs-Energiespeichereinrichtung als Energiepuffer den Wirkungsgrad verbessert, und eine Stromübertragung über den Rotorschleifring vermindert.

Der DE 10 2012 101 484 A1 liegt die Aufgabe zugrunde, eine zusätzliche Einrichtung als "zweite Notfalleinrichtung" zu schaffen, für den Fall, dass eine oder mehrere Standard Notfalleinrichtungen wegen einer Störung die Verstellung des Einstellwinkels an einem oder mehreren Rotorblättern in eine Position zur Leistungsbegrenzung nicht ermöglichen, wobei das Verfahren zur Abbremsung einer Windenergieanlage in einem Notfall durch Verstellung der Rotorblätter für Windenergieanlagen mit Leistungsregelung nach dem Prinzip der Pitchregelung oder Aktiv-Stallregelung und für jedes Rotorblatt mit mindestens einem Stellmotor und mit mindestens einer Haltebremse zum Festhalten der Position eines Rotorblattes nach der DE 10 2012 101 484 A1 eine Redundanz für den Notfall beinhaltet, um eine oder mehrere Haltebremsen, die ein Rotorblatt gegen Verdrehung festhalten, in Abhängigkeit der benötigten Rotorblatt-Verstellrichtung öffnet bzw. öffnen und im Falle einer nicht gewünschten Verstellrichtung die Haltebremse bzw. die Haltebremsen schließt bzw. schließen oder geschlossen hält bzw. halten.

Die EP 2 189 655 A1 beschreibt ein Pitch-Regelsystem, das einen Hauptumrichter und einen Hilfsumrichter, einen Gleichstrommotor und ein Energiespeichersystem (Akkumulator) aufweist und über vier verschiedene Betriebsmodi verfügt: Normal, Fehler (erste Ebene), Fehler (zweite Ebene) und Notfall. Im Falle einer erkannten Störung kann das System den Motor bewegen, um die Blätter durch eine kontrollierte Verstellung in die gewünschte Position zu bringen.

Aufgabe der vorliegenden Erfindung ist es, den Betrieb einer Windenergieanlage zu verbessern.

Diese Aufgabe wird durch ein Verfahren mit den Merkmalen des Anspruchs 1 gelöst. Ansprüche 11, 12 stellen eine Windenergieanlage bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist eine Windenergieanlage einen Rotor mit wenigstens einem winkelverstellbaren Rotorblatt, das vorliegend ohne Beschränkung der Allgemeinheit als erstes Rotorblatt bezeichnet wird, und einen (entsprechend als erster Verstellantrieb bezeichneten) Verstellantrieb auf, mithilfe dessen, insbesondere durch den, dieses Rotorblatt (winkel)verstellbar ist bzw. (winkel)verstellt wird bzw. der hierzu vorgesehen, insbesondere eingerichtet ist bzw. verwendet wird.

Der Rotor ist in einer Ausführung an einer Gondel der Windenergieanlage um eine, insbesondere horizontale, Rotor-Drehachse drehbar gelagert und in einer Ausführung mit einem Generator zur Umsetzung einer Rotordrehung bzw. -leistung in elektrische Energie, insbesondere zum Einspeisen in ein (Energieversorgungs- bzw. Strom)Netz, gekoppelt. Die Gondel ist in einer Ausführung an einem Turm angeordnet und in einer Ausführung durch einen Gondelantrieb um eine vertikale Gondel-Drehachse drehbar.

In einer Ausführung weist der Rotor mehrere, in einer Ausführung drei, winkelverstellbaren Rotorblätter auf, die in einer Ausführung längs eines Umfangs des Rotors verteilt (angeordnet) sind.

Für solche Windenergieanlagen ist die vorliegende Erfindung, insbesondere aufgrund der dabei auftretenden Lasten und Betriebsbedingungen, besonders geeignet, ohne hierauf beschränkt zu sein.

In einer Ausführung sind ein oder mehrere, insbesondere alle, Rotorblätter des Rotors (jeweils) durch einen eigenen Verstellantrieb (winkel)verstellbar.

Hierdurch kann in einer Ausführung die Blattstellung individuell angepasst und dadurch die Sicherheit erhöht und/oder die Leistungsregelung der Windenergieanlage verbessert werden.

Unter einer (Winkel)Verstellung eines Rotorblatts wird vorliegend insbesondere eine Verdrehung des Rotorblatts um eine Rotorblatt-Drehachse verstanden, welche sich in Längsrichtung des Rotorblatts und/oder quer zur Rotor-Drehachse erstreckt. Sofern vorliegend von einem Verstellen bzw. einer Stellung gesprochen wird, kann dies (jeweils) ein Verdrehen bzw. eine Winkelstellung bzw. -lage um die Rotorblatt-Drehachse sein.

Nach einer Ausführung der vorliegenden Erfindung weist die Windenergieanlage eine Sicherheitssteuerung auf. Diese ist in einer Ausführung vollständig oder teilweise redundant, in einer Ausführung vollständig oder teilweise diversitär, in einer Ausführung weist sie wenigstens eine(n) SLC auf. In einer Ausführung handelt es sich bei der SLC um eine Sicherheitssteuerung gemäß IEC 61508/IEC61511 mit Sicherheits-Integritätslevel (SIL) SIL2 oder SIL3, welche in einer Ausführung in der Rotornabe der Windenergieanlage angeordnet ist.

Hierdurch kann in einer Ausführung trotz nachfolgend erläuterter Abkehr von bekannten Sicherheitskonzepten deren Sicherheitsniveau bzw. -stufe realisiert werden.

Nach einer Ausführung der vorliegenden Erfindung wird in einem Normalbetriebsmodus der erste Verstellantrieb aus einer Energiequelle versorgt und durch eine erste Pitchsteuerung gesteuert. In einer Ausführung, in der der Rotor wenigstens ein weiteres winkelverstellbares Rotorblatt und einen weiteren Verstellantrieb zum Verstellen dieses weiteren Rotorblatts aufweist, wird in dem Normalbetriebsmodus der weitere Verstellantrieb aus der Energiequelle versorgt und durch die erste oder eine weitere Pitchsteuerung gesteuert.

Hierdurch können Rotorblätter vorteilhaft, in einer Ausführung individuell, verstellt und dadurch in einer Ausführung die Effizienz und/oder Sicherheit der Windenergieanlage verbessert werden.

Nach einer Ausführung der vorliegenden Erfindung ist, insbesondere wird, in einem Störfallbetriebsmodus die Energieversorgung des ersten Verstellantriebs von der Energiequelle auf einen (ersten) Energiespeicher umgeschaltet und die Sicherheitssteuerung überwacht (wenigstens temporär während des Störfallbetriebsmodus) eine Stellung und/oder Bewegung des ersten Rotorblatts.

In einer Ausführung ist, insbesondere wird, in dem Störfallbetriebsmodus die Energieversorgung des weiteren Verstellantriebs von der Energiequelle auf den(selben bzw. ersten) oder einen weiteren Energiespeicher umgeschaltet und die Sicherheitssteuerung überwacht (wenigstens temporär während des Störfallbetriebsmodus) eine Stellung und/oder Bewegung des weiteren Rotorblatts.

In einer Ausführung wird der Störfallbetriebsmodus durchgeführt, falls eine Störung der Energieversorgung des ersten Verstellantriebs und/oder des weiteren Verstellantriebs aus der Energiequelle auftritt, wird in einer Ausführung hierdurch aktiviert bzw. ausgelöst.

Die vorliegende Erfindung ist insbesondere für solche Störfälle besonders geeignet, ohne hierauf beschränkt zu sein. So kann der Störfallbetriebsmodus in einer Ausführung zusätzlich oder alternativ auch durchgeführt bzw. aktiviert bzw. ausgelöst werden, falls der erste Verstellantrieb, weitere Verstellantrieb, die erste Pitchsteuerung oder die weitere Pitchsteuerung eine Störung aufweist, insbesondere defekt ist, insbesondere dies durch die Sicherheitssteuerung erfasst wird.

Nach einer Ausführung der vorliegenden Erfindung weist die Windenergieanlage eine erste Energieversorgungs-Abschalteinrichtung auf, die die Energieversorgung des ersten Verstellantriebs aus dem (ersten) Energiespeicher infolge einer Stellung des ersten Rotorblatts in einem vorgegeben (ersten) Abschaltbereich abschaltet bzw. hierzu vorgesehen, insbesondere eingerichtet ist bzw. verwendet wird.

In einer Ausführung weist die Windenergieanlage eine weitere Energieversorgungs-Abschalteinrichtung auf, die die Energieversorgung des weiteren Verstellantriebs aus dem (ersten bzw. weiteren) Energiespeicher infolge einer Stellung des weiteren Rotorblatts in einem vorgegeben (weiteren) Abschaltbereich abschaltet bzw. hierzu vorgesehen, insbesondere eingerichtet ist bzw. verwendet wird.

Die erste und/oder weitere Energieversorgungs-Abschalteinrichtung weist in einer Ausführung (jeweils) wenigstens ein Schütz zum Abschalten einer elektrischen Energieversorgung oder wenigstens ein Schaltventil zum Abschalten einer hydraulischen Energieversorgung auf, das in einer Ausführung durch das (jeweilige) Rotorblatt oder den jeweiligen Verstellantrieb betätigt wird.

Auf diese Weise kann in einer Ausführung, insbesondere in der einleitend erläuterten Weise, ein sicheres Anhalten des (jeweiligen) Rotorblatts in dem (jeweiligen) Abschaltbereich realisiert werden.

Nach einer Ausführung der vorliegenden Erfindung wird in dem Störfallbetriebsmodus das erste Rotorblatt durch den ersten Verstellantrieb in Richtung einer vorgegebenen (ersten) Haltestellung verstellt, in einer Weiterbildung auch, in einer Ausführung unabhängig hiervon, das weitere Rotorblatt durch den weiteren Verstellantrieb in Richtung einer vorgegebenen (weiteren) Haltestellung verstellt.

Auf diese Weise kann in einer Ausführung, insbesondere in der einleitend erläuterten Weise, ein sicheres Anfahren einer Fahnenstellung des (jeweiligen) Rotorblatts, in der dieses, wenigstens im Wesentlichen, keine Leistung an einer Rotor-Drehachse bzw. -nabe erzeugt, oder auch einer, insbesondere vorgelagerten, Trudelstellung, insbesondere um eine Schmierung und/oder statische Belastung zu verbessern, wobei die Trudelstellung in einer Ausführung von der Fahnenstellung um wenigstens 5° und/oder höchstens 15° abweicht, realisiert werden. Entsprechend ist die (erste bzw. weitere) Haltestellung in einer Ausführung eine solche Fahnen- oder Trudelstellung des (jeweiligen) Rotorblatts.

Nach einer Ausführung der vorliegenden Erfindung ist, insbesondere wird während dieses Anfahrens der (ersten) Haltestellung mit dem ersten Rotorblatt in dem Störfallbetriebsmodus eine Deaktivierung der ersten Energieversorgungs-Abschalteinrichtung durch die Sicherheitssteuerung in Abhängigkeit von der überwachten Stellung und/oder Bewegung des ersten Rotorblatts (direkt) bewirkt oder, insbesondere aktiv, in einer Ausführung durch wenigstens ein entsprechendes Signal, freigegeben.

In einer Ausführung ist, insbesondere wird während des Anfahrens der (weiteren) Haltestellung mit dem weiteren Rotorblatt in dem Störfallbetriebsmodus eine Deaktivierung der weiteren Energieversorgungs-Abschalteinrichtung durch die Sicherheitssteuerung in Abhängigkeit von der überwachten Stellung und/oder Bewegung des weiteren Rotorblatts (direkt) bewirkt oder, insbesondere aktiv, in einer Ausführung durch wenigstens ein entsprechendes Signal, freigegeben, in einer Ausführung unabhängig von der ersten Energieversorgungs-Abschalteinrichtung bewirkt bzw. freigegeben.

In einer Ausführung bewirkt die Sicherheitssteuerung die Deaktivierung, in einer Ausführung, indem sie die entsprechende Energieversorgungs-Abschalteinrichtung selber bzw. direkt kontrolliert. In einer Ausführung gibt die Sicherheitssteuerung die Deaktivierung frei, in einer Ausführung die Deaktivierung durch die (jeweilige, also erste bzw. gegebenenfalls weitere) Pitchsteuerung, indem sie dieser eine entsprechende Deaktivierung, insbesondere aktiv, in einer Ausführung durch wenigstens ein entsprechendes Signal, freigibt bzw. diese Pitchsteuerung entsprechend kontrolliert.

Dies stellt eine bewusste Abkehr von bisherigen Sicherheitskonzepten dar, die durch stets aktive Energieversorgungs-Abschalteinrichtungen ein Anhalten des Rotorblatts bei Verstellen in Richtung des Abschaltbereichs mittels Energieversorgung aus dem Energiespeicher sicherstellen wollen. Unter einem Deaktivieren einer Energieversorgungs-Abschalteinrichtung wird vorliegend insbesondere verstanden, dass die deaktivierte Energieversorgungs-Abschalteinrichtung die Energieversorgung des (jeweiligen) Verstellantriebs aus dem (jeweiligen) Energiespeicher nicht abschaltet, obwohl die Stellung des (jeweiligen) Rotorblatts in dem (jeweiligen) Abschaltbereich liegt, unter einem Aktivieren entsprechend, dass die aktiv(iert)e Energieversorgungs-Abschalteinrichtung die Energieversorgung des (jeweiligen) Verstellantriebs aus dem (jeweiligen) Energiespeicher abschaltet, wenn die Stellung des (jeweiligen) Rotorblatts in dem (jeweiligen) Abschaltbereich liegt. Dies kann insbesondere durch entsprechendes Schalten eines bzw. des Schütz bzw. (Ent)Sperren eines bzw. des Schaltventils, insbesondere durch die Sicherheitssteuerung bzw. jeweilige (d.h. erste bzw. gegebenenfalls weitere) Pitchsteuerung, realisiert werden.

Durch diese bewusste Abkehr von bisherigen Sicherheitskonzepten kann in einer Ausführung vorteilhaft eine Haltestellung präzise(r) angefahren und/oder flexibler vorgegeben werden, insbesondere auch innerhalb des (jeweiligen) Haltebereichs liegen. Entsprechend liegt in einer Ausführung die erste Haltestellung innerhalb des ersten Abschaltbereichs und/oder die weitere Haltestellung innerhalb des weiteren Abschaltbereichs. In einer Ausführung umfasst der erste Abschaltbereich somit neben der ersten Haltestellung noch mehrere Stellungen und/oder der weitere Abschaltbereich somit neben der weiteren Haltestellung noch mehrere Stellungen, in einer Ausführung erstreckt sich der erste und/oder weitere Abschaltbereich (jeweils) über wenigstens 2°.

Dadurch kann in einer Ausführung die Sicherheit verbessert, insbesondere die Wahrscheinlichkeit eines unerwünschten Wegrutsches aus dem Haltebereichs reduziert werden.

Zusätzlich oder alternativ kann hierdurch, insbesondere im Vergleich zu einem fest, insbesondere mechanisch, vorgegebenen Haltebereich einer Energieversorgungs-Abschalteinrichtung, die Haltestellung an einen Zustand der Windenergieanlage und/oder ihrer Umgebung, insbesondere unterschiedliche Windstärken, angepasst werden. So kann beispielsweise bei stärkerem Wind eine der Fahnenstellung nähere Trudelstellung und bei schwächerem Wind eine von der Fahnenstellung weiter entfernte Trudelstellung als Haltestellung vorgegeben bzw. angefahren werden.

Entsprechend wird in einer Ausführung die (erste und/oder weitere) Haltestellung auf Basis eines, in einer Ausführung aktuellen und/oder prognostizierten, Zustands der Windenergieanlage und/oder ihrer Umgebung, insbesondere einer, in einer Ausführung aktuellen und/oder prognostizierten, Windstärke, vorgegeben, in einer Ausführung verändert bzw. aktualisiert.

Hierdurch kann in einer Ausführung die Sicherheit verbessert werden.

In einer Ausführung schaltet die Sicherheitssteuerung nach Erreichen der (ersten) Haltestellung die Energieversorgung des ersten Verstellantriebs aus dem Energiespeicher ab, bevor sie eine (Wieder)Aktivierung der ersten Energieversorgungs-Abschalteinrichtung bewirkt oder (wieder) freigibt. In einer Ausführung schaltet die Sicherheitssteuerung nach Erreichen der weiteren Haltestellung die Energieversorgung des weiteren Verstellantriebs aus dem (ersten bzw. weiteren) Energiespeicher ab, bevor sie eine (Wieder)Aktivierung der weiteren Energieversorgungs-Abschalteinrichtung bewirkt oder (wieder) freigibt, in einer Ausführung unabhängig von einer (De)Aktivierung der ersten Energieversorgungs-Abschalteinrichtung.

Dadurch kann in einer Ausführung ein Abschalten der Energieversorgung durch die (jeweilige) Energieversorgungs-Abschalteinrichtung unter Last bzw. ein hartes Unterbrechen der Energieversorgung durch die (jeweilige) Energieversorgungs-Abschalteinrichtung reduziert und dadurch insbesondere deren Belastung und/oder Verschleiß reduziert werden.

In einer Ausführung gibt die Sicherheitssteuerung eine Aktivierung der ersten Energieversorgungs-Abschalteinrichtung (wieder) frei oder bewirkt eine (Wieder)Aktivierung der ersten Energieversorgungs-Abschalteinrichtung, falls sie einen Fehler beim Anfahren der (ersten) Haltestellung mit dem ersten Rotorblatt, in einer Ausführung eine Fehlfunktion der ersten Pitchsteuerung, erfasst, in einer Ausführung, falls eine Abweichung der von ihr überwachten Stellung des ersten Rotorblatts von einer vorgegebenen Stellung und/oder eine Abweichung der von ihr überwachten Bewegung des ersten Rotorblatts von einer vorgegebenen Bewegung einen vorgegebenen Toleranzbereich überschreitet. In einer Ausführung gibt die Sicherheitssteuerung eine Aktivierung der weiteren Energieversorgungs-Abschalteinrichtung (wieder) frei oder bewirkt eine (Wieder)Aktivierung der weiteren Energieversorgungs-Abschalteinrichtung, falls sie einen Fehler beim Anfahren der weiteren Haltestellung mit dem weiteren Rotorblatt, in einer Ausführung eine Fehlfunktion der den weiteren Verstellantrieb steuernden ersten bzw. weiteren Pitchsteuerung, erfasst, in einer Ausführung, falls eine Abweichung der von ihr überwachten Stellung des weiteren Rotorblatts von einer vorgegebenen Stellung und/oder eine Abweichung der von ihr überwachten Bewegung des weiteren Rotorblatts von einer vorgegebenen Bewegung einen vorgegebenen Toleranzbereich überschreitet.

Hierdurch kann in einer Ausführung die Sicherheit verbessert werden.

In einer Ausführung wird der erste Verstellantrieb zum bzw. beim Verstellen des ersten Rotorblatts in Richtung der (ersten) Haltestellung durch die erste Pitchsteuerung gesteuert. In einer Ausführung wird der weitere Verstellantrieb zum bzw. beim Verstellen des weiteren Rotorblatts in Richtung der weiteren Haltestellung durch die erste oder weitere Pitchsteuerung gesteuert, in einer Ausführung durch die erste oder weitere Pitchsteuerung individuell bzw. unabhängig von der ersten Pitchsteuerung.

Dadurch kann in einer Ausführung eine für den jeweiligen Verstellantrieb spezifische Pitchsteuerung bzw. eine für mehrere Verstellantriebe zuständige bzw. diese, in einer Ausführung individuell, steuernde Pitchsteuerung auch zum gesteuerten Anfahren der Haltestellung unter Energieversorgung aus dem Energiespeicher bei deaktivierter Energieversorgungs-Abschalteinrichtung verwendet und dadurch in einer Ausführung der Aufwand zur Auslegung der Sicherheitssteuerung und/oder deren Aufgaben reduziert werden.

In einer Ausführung wird der erste Verstellantrieb zum bzw. beim Verstellen des ersten Rotorblatts in Richtung der (ersten) Haltestellung durch die Sicherheitssteuerung gesteuert. In einer Ausführung wird der weitere Verstellantrieb zum bzw. beim Verstellen des weiteren Rotorblatts in Richtung der weiteren Haltestellung durch die Sicherheitssteuerung gesteuert, in einer Ausführung unabhängig von dem ersten Rotorblatt.

Dadurch kann in einer Ausführung die Sicherheit erhöht, insbesondere auch bei einer Fehlfunktion der jeweiligen Pitchsteuerung die Haltestellung angefahren werden.

In einer Ausführung weist die Windenergieanlage eine zweite Energieversorgungs-Abschalteinrichtung auf, die die Energieversorgung des ersten Verstellantriebs aus dem Energiespeicher infolge einer Verstellung des ersten Rotorblatts über den ersten Abschaltbereich hinaus in einen zweiten Abschaltbereich hinein abschaltet bzw. hierzu vorgesehen, insbesondere eingerichtet ist bzw. verwendet wird.

In einer Ausführung weist die Windenergieanlage eine andere Energieversorgungs-Abschalteinrichtung auf, die die Energieversorgung des weiteren Verstellantriebs aus dem (ersten bzw. weiteren) Energiespeicher infolge einer Verstellung des weiteren Rotorblatts über den weiteren Abschaltbereich hinaus in einen anderen Abschaltbereich hinein abschaltet bzw. hierzu vorgesehen, insbesondere eingerichtet ist bzw. verwendet wird.

Die zweite und/oder andere Energieversorgungs-Abschalteinrichtung weist in einer Ausführung (jeweils) wenigstens ein Schütz zum Abschalten einer elektrischen Energieversorgung oder wenigstens ein Schaltventil zum Abschalten einer hydraulischen Energieversorgung auf, das in einer Ausführung durch das (jeweilige) Rotorblatt oder den jeweiligen Verstellantrieb betätigt wird.

Dadurch kann in einer Ausführung die Sicherheit erhöht werden.

In einer Ausführung ist, insbesondere wird während des Anfahrens der (ersten) Haltestellung mit dem ersten Rotorblatt in dem Störfallbetriebsmodus (auch) eine Deaktivierung der zweiten Energieversorgungs-Abschalteinrichtung durch die Sicherheitssteuerung in Abhängigkeit von der überwachten Stellung und/oder Bewegung des ersten Rotorblatts (direkt) bewirkt oder, insbesondere aktiv, in einer Ausführung durch wenigstens ein entsprechendes Signal, freigegeben.

In einer Ausführung ist, insbesondere wird während des Anfahrens der (weiteren) Haltestellung mit dem weiteren Rotorblatt in dem Störfallbetriebsmodus (auch) eine Deaktivierung der anderen Energieversorgungs-Abschalteinrichtung durch die Sicherheitssteuerung in Abhängigkeit von der überwachten Stellung und/oder Bewegung des weiteren Rotorblatts (direkt) bewirkt oder, insbesondere aktiv, in einer Ausführung durch wenigstens ein entsprechendes Signal, freigegeben, in einer Ausführung unabhängig von der ersten Energieversorgungs-Abschalteinrichtung bewirkt bzw. freigegeben.

Hierdurch kann in einer Ausführung vorteilhaft eine Haltestellung angefahren werden, die in dem zweiten bzw. anderen Abschaltbereich liegt, insbesondere eine Haltestellung im Bereich einer Fahnenstellung nach Überfahren eines vorgelagerten ersten bzw. weiteren Trudelstellungs-Abschaltbereichs.

Zusätzlich oder alternativ zu dem hier beschriebenen Aspekt eines gesteuerten Anfahrens einer Haltestellung unter Energieversorgung aus einem Energiespeicher bei deaktivierter Energieversorgungs-Abschalteinrichtung weist die Windenergieanlage nach einer Ausführung der vorliegenden Erfindung eine erste Pitch-Bremse, die (im geschlossenen Zustand) das erste Rotorblatt hält bzw. hierzu vorgesehen, insbesondere eingerichtet ist bzw. verwendet wird, und eine (erste) Pitch-Bremsschließ-Schalteinrichtung auf, die die erste Pitch-Bremse schließt, falls eine Stellung des ersten Rotorblatts in einem (ersten) Pitch-Bremsschließbereich liegt, bzw. hierzu vorgesehen, insbesondere eingerichtet ist bzw. verwendet wird. Der (erste) Pitch-Bremsschließbereich liegt in einer Ausführung innerhalb des (ersten) Abschaltbereichs oder ist mit diesem identisch oder übergreift diesen.

In einer Ausführung weist die Windenergieanlage eine weitere Pitch-Bremse, die (im geschlossenen Zustand) das weitere Rotorblatt hält bzw. hierzu vorgesehen, insbesondere eingerichtet ist bzw. verwendet wird, in einer Ausführung unabhängig von der ersten Pitch-Bremse, und eine weitere Pitch-Bremsschließ-Schalteinrichtung auf, die die weitere Pitch-Bremse schließt, falls eine Stellung des weiteren Rotorblatts in einem weiteren Pitch-Bremsschließbereich liegt, bzw. hierzu vorgesehen, insbesondere eingerichtet ist bzw. verwendet wird, in einer Ausführung unabhängig von der ersten Pitch-Bremse. Der weitere Pitch-Bremsschließbereich liegt in einer Ausführung innerhalb des weiteren Abschaltbereichs oder ist mit diesem identisch oder übergreift diesen.

Nach einer Ausführung der vorliegenden Erfindung schließt in dem Störfallbetriebsmodus die Sicherheitssteuerung in Abhängigkeit von der überwachten Stellung und/oder Bewegung des ersten Rotorblatts anstelle der (ersten) Pitch-Bremsschließ-Schalteinrichtung die erste Pitch-Bremse und aktiviert einen ersten Sperrmodus, in dem die Energieversorgung des ersten Verstellantriebs und/oder ein Öffnen der ersten Pitch-Bremse unterbunden ist, in einer Ausführung vor Erreichen des (ersten) Pitch-Bremsschließbereichs.

In einer Ausführung schließt in dem Störfallbetriebsmodus die Sicherheitssteuerung in Abhängigkeit von der überwachten Stellung und/oder Bewegung des weiteren Rotorblatts anstelle der weiteren Pitch-Bremsschließ-Schalteinrichtung die weitere Pitch-Bremse und aktiviert einen weiteren Sperrmodus, in dem die Energieversorgung des weiteren Verstellantriebs und/oder ein Öffnen der weiteren Pitch-Bremse unterbunden ist, in einer Ausführung unabhängig von dem ersten Sperrmodus und/oder vor Erreichen des weiteren Pitch-Bremsschließbereichs.

Dem liegt insbesondere die Erkenntnis zugrunde, dass bei bisherigen Sicherheitskonzepten die Pitch-Bremsen während des Anfahrens der Abschaltbereiche geöffnet sind und erst infolge des Erreichens des jeweiligen Pitch-Bremsschließbereichs (wieder) geschlossen werden, so dass ein solches (selbsttätiges) Schließen im Pitch-Bremsschließbereich dessen Erreichen durch das Verstellen des jeweiligen Rotorblattes voraussetzt.

Tritt jedoch dabei eine Störung auf, ist beispielsweise der entsprechende Verstellantrieb defekt, kann die zugehörige Pitch-Bremse geöffnet bleiben und das zugehörige Rotorblatt sich entsprechend unkontrolliert verstellen.

Hierauf aufbauend wird nach dem hier beschriebenen Aspekt der vorliegenden Erfindung vorgeschlagen, zusätzlich zu der bzw. einer oder mehrerer der Pitch-Bremsschließ-Schalteinrichtung(en jeweils) ein Schließen der (jeweiligen) Pitch-Bremse auch durch die Sicherheitssteuerung vorzusehen, insbesondere falls deren Überwachung der Stellung bzw. Bewegung des (jeweiligen) Rotorblattes anzeigt, dass bei dem Anfahren des (jeweiligen) Pitch-Bremsschließbereichs ein Fehler auftritt.

Entsprechend schließt in einer Ausführung die Sicherheitssteuerung die erste Pitch-Bremse, falls eine Abweichung der von ihr überwachten Stellung des ersten Rotorblatts von einer vorgegebenen Stellung und/oder eine Abweichung der von ihr überwachten Bewegung des ersten Rotorblatts von einer vorgegebenen Bewegung einen vorgegebenen Toleranzbereich überschreitet, insbesondere, falls ein Abstand (der Stellung) des ersten Rotorblatts zu dem (ersten) Pitch-Bremsschließbereich sich nicht in vorgegebener Weise verringert, insbesondere falls sich dieser Abstand vergrößert.

In einer Ausführung schließt die Sicherheitssteuerung die weitere Pitch-Bremse, falls eine Abweichung der von ihr überwachten Stellung des weiteren Rotorblatts von einer vorgegebenen Stellung und/oder eine Abweichung der von ihr überwachten Bewegung des weiteren Rotorblatts von einer vorgegebenen Bewegung einen vorgegebenen Toleranzbereich überschreitet, insbesondere, falls ein Abstand (der Stellung) des weiteren Rotorblatts zu dem weiteren Pitch-Bremsschließbereich sich nicht in vorgegebener Weise verringert, insbesondere falls sich dieser Abstand vergrößert.

Insbesondere, um die solcherart geschlossene Pitch-Bremse zu entlasten, unterbindet die Sicherheitssteuerung in einer Ausführung zusätzlich in dem ersten aktivierten Sperrmodus die Energieversorgung des ersten Verstellantriebs aus dem (ersten) Energiespeicher, in einer Ausführung durch Abschalten der Energieversorgung des ersten Verstellantriebs und/oder durch Unterbinden einer Ansteuerung des ersten Verstellantriebs zur Verstellung des ersten Rotorblatts. In einer Ausführung unterbindet die Sicherheitssteuerung in dem weiteren aktivierten Sperrmodus die Energieversorgung des weiteren Verstellantriebs aus dem (ersten bzw. weiteren) Energiespeicher, in einer Ausführung durch Abschalten der Energieversorgung des weiteren Verstellantriebs und/oder durch Unterbinden einer Ansteuerung des weiteren Verstellantriebs zur Verstellung des weiteren Rotorblatts.

Zusätzlich oder alternativ unterbindet die Sicherheitssteuerung in dem ersten aktivierten Sperrmodus ein Öffnen der (von ihr geschlossenen) ersten Pitch-Bremse und/oder in dem weiteren aktivierten Sperrmodus ein Öffnen der (von ihr geschlossenen) weiteren Pitch-Bremse.

Dadurch kann in einer Ausführung die Sicherheit erhöht werden.

Auch dieser Aspekt stellt eine bewusste Abkehr von bekannten Sicherheitskonzepten dar, die bei einem Störfall stets zwingend eine Energieversorgung der Verstellantriebe durch den bzw. die Energiespeicher vorsehen, um die Fahnenstellung anzufahren. Wie vorstehend erläutert, hat erst die vorliegende Erfindung erkannt, dass, sofern die Verstellung in den Pitch-Bremsschließbereich ungewollt unterbleibt, die Pitch-Bremse nicht durch die dafür vorgesehene Pitch-Bremsschließ-Schalteinrichtung geschlossen wird. Durch das Unterbinden einer Energieversorgung des Verstellantriebs aus dem Energiespeicher und eines Öffnens der Pitch-Bremse, nachdem die Pitch-Bremse (statt durch die Pitch-Bremsschließ-Schalteinrichtung) durch die Sicherheitssteuerung geschlossen worden ist, kann in einer Ausführung das Rotorblatt zuverlässig in seiner aktuellen Stellung gehalten werden.

Unter einem Aktivieren eines Sperrmodus wird vorliegend insbesondere das Durchführen des Sperrmodus, insbesondere Umschalten in den Sperrmodus, verstanden. In einer Ausführung erfordert die Aktivierung des ersten Sperrmodus ein Schalten von wenigstens zwei Schaltmitteln, in einer Ausführung zwei Relais, Ventilen oder dergleichen, durch die Sicherheitssteuerung und/oder die Aktivierung des weiteren Sperrmodus ein Schalten von wenigstens zwei Schaltmitteln, in einer Ausführung zwei Relais, Ventilen oder dergleichen, durch die Sicherheitssteuerung.

Hierdurch kann in einer Ausführung die Sicherheit erhöht werden.

In einer Ausführung kann der (aktivierte) erste und/oder weitere Sperrmodus (wieder) deaktiviert werden. In einer Ausführung erfordert eine Deaktivierung des ersten Sperrmodus eine manuelle und/oder (rotorblatt- bzw. verstellantriebs)individuelle (erste) Eingabe für den ersten Verstellantrieb. In einer Ausführung erfordert eine Deaktivierung des weiteren Sperrmodus eine manuelle und/oder (rotorblatt- bzw. verstellantriebs)individuelle weitere Eingabe für den weiteren Verstellantrieb.

Hierdurch kann in einer Ausführung die Sicherheit erhöht werden.

Wie vorstehend erläutert, stellen Aspekte der vorliegenden Erfindung eine bewusste, teils radikale, Abkehr von bisherigen Sicherheitskonzepten dar.

Insbesondere daher überwacht die Sicherheitssteuerung die Stellung und/oder Bewegung des ersten Rotorblatts und/oder die Stellung und/oder Bewegung des weiteren Rotorblatts in einer Ausführung (jeweils) redundant, in einer Weiterbildung diversitär und/oder mithilfe von wenigstens zwei redundanten Sensoren. (Erst) Hierdurch wird es überraschend möglich, trotz der Abkehr von bisherigen Sicherheitskonzepten ein vergleichbares Sicherheitsniveau zu erreichen.

In einer Ausführung weist der erste Verstellantrieb und/oder der weitere Verstellantrieb (jeweils) wenigstens einen Elektromotor, in einer Ausführung wenigstens einen Gleichstrommotor, auf, in einer Ausführung umfasst der Energiespeicher zur Energieversorgung dieses Verstellantriebs (jeweils) einen elektrischen Energiespeicher, insbesondere eine oder mehrere Primär- und/oder eine oder mehrere Sekundärbatterien bzw. wiederaufladbare Akkumulatoren und/oder einen oder mehrere Kondensatoren, insbesondere Super- bzw. Ultrakondensatoren (Super- bzw. Ultra-Caps).

Insbesondere da solche Verstellantriebe von einem Netzausfall besonders betroffen sind, ist die vorliegende Erfindung hierfür besonders vorteilhaft. Dabei ist die vorliegende Erfindung für Gleichstrommotoren aufgrund von deren elektrischer Charakteristik besonders vorteilhaft.

In einer Ausführung weist der erste Verstellantrieb und/oder der weitere Verstellantrieb (jeweils) wenigstens einen Hydraulikaktuator, insbesondere wenigstens einen Hydraulikzylinder auf, in einer Ausführung umfasst der Energiespeicher zur Energieversorgung dieses Verstellantrieb (jeweils) einen ein- oder mehrkammerigen (Hydraulik)Druckspeicher bzw. Druckenergiespeicher, in einer Ausführung hydropneumatischen (Druck(energie))Speicher. Entsprechend wird auch (eine) Hydraulikdruck(versorgung) zum (Winkel)Verstellen eines Rotorblatts durch seinen hydraulischen Verstellantrieb als (Druck)Energie(versorgung) im Sinne der vorliegenden Erfindung bezeichnet bzw. unter Energie insbesondere Antriebsenergie für den Verstellantrieb, insbesondere also elektrische Energie für einen elektromotorischen Verstellantrieb bzw. Hydraulikdruck(energie) für einen hydraulischen Verstellantrieb verstanden. Mit anderen Worten kann das Wort "Energie" vorliegend in einer Ausführung durch "(Hydraulik)Druck" ersetzt werden.

Die vorliegende Erfindung kann auch bei solchen Verstellantrieben, insbesondere aufgrund von deren Aufbau und Wirkungsweise, besonders vorteilhaft verwendet werden.

Nach einer Ausführung der vorliegenden Erfindung ist eine bzw. die Windenergieanlage, insbesondere hard- und/oder softwaretechnisch, zur Durchführung eines hier beschriebenen Verfahrens eingerichtet und/oder weist auf:
Mittel zum Versorgen eines bzw. des ersten Verstellantriebs aus einer bzw. der Energiequelle und Steuern durch eine bzw. die erste Pitchsteuerung in einem bzw. dem Normalbetriebsmodus; und
Mittel zum Umschalten der Energieversorgung des ersten Verstellantriebs von der Energiequelle auf einen bzw. den (ersten) Energiespeicher und Überwachen einer Stellung und/oder Bewegung des ersten Rotorblatts durch die Sicherheitssteuerung in einem bzw. dem Störfallbetriebsmodus; sowie wenigstens eines der folgenden Mittel:
   (i) Mittel zum Verstellen des ersten Rotorblatts durch den ersten Verstellantrieb in Richtung einer bzw. der vorgegebenen (ersten) Haltestellung, während die Sicherheitssteuerung in Abhängigkeit von der überwachten Stellung und/oder Bewegung des ersten Rotorblatts eine Deaktivierung einer bzw. der ersten Energieversorgungs-Abschalteinrichtung, die dazu eingerichtet ist, die Energieversorgung des ersten Verstellantriebs infolge einer Stellung des ersten Rotorblatts in einem bzw. dem (ersten) Abschaltbereich abzuschalten, freigibt oder bewirkt, in dem Störfallbetriebsmodus; und/oder
   (ii) Mittel zum Schließen einer bzw. der ersten Pitch-Bremse zum Halten des ersten Rotorblatts durch die Sicherheitssteuerung in Abhängigkeit von der überwachten Stellung und/oder Bewegung des ersten Rotorblatts anstelle einer bzw. der (ersten) Pitch-Bremsschließ-Schalteinrichtung, die dazu eingerichtet ist, falls eine Stellung des ersten Rotorblatts in einem bzw. dem (ersten) Pitch-Bremsschließbereich liegt, die erste Pitch-Bremse zu schließen, und zum Aktivieren eines bzw. des ersten Sperrmodus, in dem die Energieversorgung des ersten Verstellantriebs aus dem Energiespeicher und/oder ein Öffnen der ersten Pitch-Bremse unterbunden ist, in dem Störfallbetriebsmodus.

In einer Ausführung weist die Windenergieanlage bzw. ihre Mittel auf:
Mittel zum Versorgen eines bzw. des weiteren Verstellantriebs aus der Energiequelle und Steuern durch die erste Pitchsteuerung oder eine bzw. die weitere Pitchsteuerung in dem Normalbetriebsmodus;
Mittel zum Umschalten der Energieversorgung des weiteren Verstellantriebs von der Energiequelle auf den(selben bzw. ersten oder weiteren) Energiespeicher und Überwachen einer Stellung und/oder Bewegung des weiteren Rotorblatts durch die Sicherheitssteuerung in dem Störfallbetriebsmodus;
Mittel zum Verstellen des weiteren Rotorblatts durch den weiteren Verstellantrieb in Richtung einer bzw. der vorgegebenen weiteren Haltestellung, während die Sicherheitssteuerung in Abhängigkeit von der überwachten Stellung und/oder Bewegung des weiteren Rotorblatts eine Deaktivierung einer bzw. der weiteren Energieversorgungs-Abschalteinrichtung, die dazu eingerichtet ist, die Energieversorgung des weiteren Verstellantriebs infolge einer Stellung des weiteren Rotorblatts in einem bzw. dem weiteren Abschaltbereich abzuschalten, freigibt oder bewirkt, in dem Störfallbetriebsmodus;
Mittel zum Schließen einer bzw. der weiteren Pitch-Bremse zum Halten des weiteren Rotorblatts durch die Sicherheitssteuerung in Abhängigkeit von der überwachten Stellung und/oder Bewegung des weiteren Rotorblatts anstelle einer bzw. der weiteren Pitch-Bremsschließ-Schalteinrichtung, die dazu eingerichtet ist, falls eine Stellung des weiteren Rotorblatts in einem bzw. dem weiteren Pitch-Bremsschließbereich liegt, die weitere Pitch-Bremse zu schließen, und zum Aktivieren eines bzw. des weiteren Sperrmodus, in dem die Energieversorgung des weiteren Verstellantriebs aus dem (ersten bzw. weiteren) Energiespeicher und/oder ein Öffnen der weiteren Pitch-Bremse unterbunden ist, in dem Störfallbetriebsmodus;
Mittel, insbesondere wenigstens zwei redundante Sensoren, zum redundanten Überwachen der Stellung und/oder Bewegung des ersten Rotorblatts durch die Sicherheitssteuerung, sowie in einer Ausführung Mittel, insbesondere wenigstens zwei redundante Sensoren, zum redundanten Überwachen der Stellung und/oder Bewegung des weiteren Rotorblatts durch die Sicherheitssteuerung; und/oder
Mittel zum Vorgeben der (ersten und/oder weiteren) Haltestellung innerhalb des (ersten bzw. weiteren) Abschaltbereichs und/oder auf Basis eines Zustands der Windenergieanlage und/oder ihrer Umgebung.

In einer Ausführung ist die Sicherheitssteuerung dazu eingerichtet, nach Erreichen der (ersten) Haltestellung die Energieversorgung des ersten Verstellantriebs aus dem (ersten) Energiespeicher abzuschalten, bevor sie eine (Wieder)Aktivierung der ersten Energieversorgungs-Abschalteinrichtung (wieder) freigibt oder bewirkt, in einer Ausführung dazu eingerichtet, nach Erreichen der weiteren Haltestellung die Energieversorgung des weiteren Verstellantriebs aus dem (ersten bzw. weiteren) Energiespeicher abzuschalten, bevor sie eine (Wieder)Aktivierung der weiteren Energieversorgungs-Abschalteinrichtung (wieder) freigibt oder bewirkt.

In einer Ausführung ist die Sicherheitssteuerung dazu eingerichtet, eine (Wieder)Aktivierung der ersten Energieversorgungs-Abschalteinrichtung (wieder) freizugeben oder zu bewirken, falls sie einen Fehler beim Anfahren der (ersten) Haltestellung mit dem ersten Rotorblatt erfasst, in einer Ausführung dazu eingerichtet, eine (Wieder)Aktivierung der weiteren Energieversorgungs-Abschalteinrichtung (wieder) freizugeben oder zu bewirken, falls sie einen Fehler beim Anfahren der weiteren Haltestellung mit dem weiteren Rotorblatt erfasst.

In einer Ausführung ist die erste Pitchsteuerung oder die Sicherheitssteuerung dazu eingerichtet, den ersten Verstellantrieb zum Verstellen des ersten Rotorblatts in Richtung der Haltestellung zu steuern, in einer Ausführung die erste oder weitere Pitchsteuerung oder die Sicherheitssteuerung dazu eingerichtet, den weiteren Verstellantrieb zum Verstellen des weiteren Rotorblatts in Richtung der Haltestellung zu steuern.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Windenergieanlage betreiben kann.

Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch die Windenergieanlage, insbesondere ihre Steuerungen bzw. ihre Mittel.

Ein Steuern umfasst in einer Ausführung ein Regeln. Eine Energieversorgungs-Abschalteinrichtung kann eine Pitch-Bremsschließ-Schalteinrichtung aufweisen, insbesondere sein. Eine Pitch-Bremsschließ-Schalteinrichtung kann eine Energieversorgungs-Abschalteinrichtung aufweisen, insbesondere sein.

In einer Ausführung ist eine bzw. die Fahnenstellung eine Stellung wenigstens im Wesentlichen senkrecht zu einer Ausrichtung für maximale Leistung bzw. um wenigstens 85° und/oder höchstens 95° gegenüber einer solchen (normalen) Ausrichtung verdreht.

In einer Ausführung umfasst, in einer Weiterbildung ist, die Energiequelle ein (Strom)Netz oder ein Hydrauliksystem bzw. -netz bzw. eine Hydraulik(druck)quelle bzw. -versorgung.

Weitere Vorteile und Merkmale ergeben sich aus den Unteransprüchen und den Ausführungsbeispielen. Hierzu zeigt, teilweise schematisiert:
- Fig. 1:: einen Teil einer Windenergieanlage nach einer Ausführung der vorliegenden Erfindung;
- Fig. 1a:: eine Vergrößerung eines Ausschnitts der Fig. 1;
- Fig. 2:: ein Verfahren zum Betreiben der Windenergieanlage nach bisheriger internen Praxis;
- Fig. 3:: ein Verfahren zum Betreiben der Windenergieanlage nach einer Ausführung der vorliegenden Erfindung; und
- Fig. 4:: ein Verfahren zum Betreiben der Windenergieanlage nach einer weiteren Ausführung der vorliegenden Erfindung.

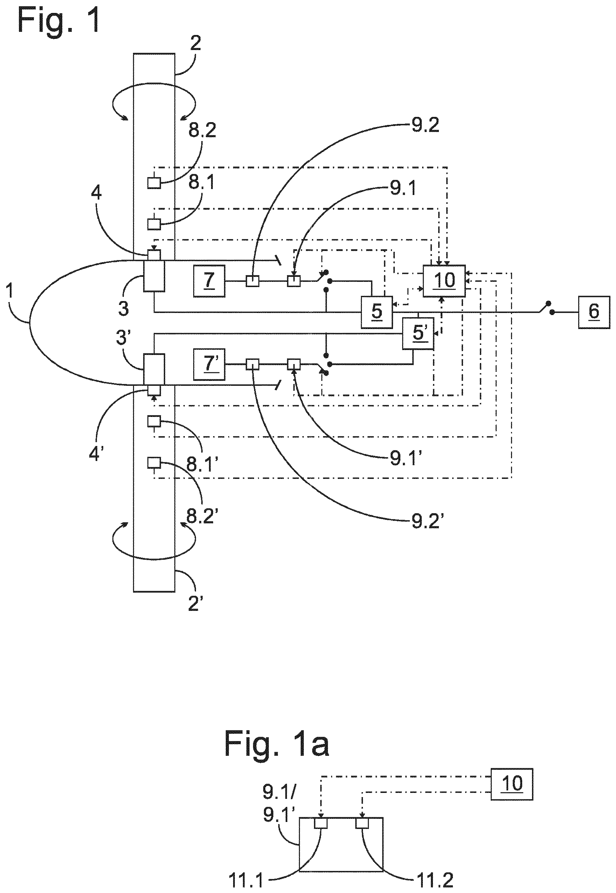

Fig. 1 zeigt einen Teil einer Windenergieanlage nach einer Ausführung der vorliegenden Erfindung mit einem Rotor 1 mit drei winkelverstellbaren Rotorblättern, von denen in Fig. 1 ein erstes Rotorblatt 2 und ein weiteres Rotorblatt 2' zu sehen sind.

Jedes der Rotorblätter ist durch einen eigenen elektromotorischen oder hydraulischen Verstellantrieb 3 bzw. 3' verstellbar, wie in Fig. 1 durch Bewegungsdoppelpfeile angedeutet.

In einem Normalbetriebsmodus werden hierzu die Verstellantriebe 3, 3' aus einer Energiequelle 6, beispielsweise einem Stromnetz oder einer Hydraulik(druck)quelle, versorgt und durch Pitchsteuerungen 5, 5' gesteuert, der erste Verstellantrieb 3 zum Verstellen des ersten Rotorblatts 2 durch eine erste Pitchsteuerung 5 und der weitere Verstellantrieb 3' zum Verstellen des weiteren Rotorblatts 2' durch eine weitere Pitchsteuerung 5'. In einer nicht dargestellten Abwandlung können auch beide Verstellantriebe 3, 3' durch eine (gemeinsame bzw. erste) Pitchsteuerung gesteuert werden.

Bei einer Störung der Energiequelle 6 werden die Verstellantriebe 3, 3' in einem Sonderbetriebsmodus stattdessen durch Energiespeicher 7, 7' versorgt. In einer nicht dargestellten Abwandlung können auch zwei oder mehr der Verstellantriebe durch denselben Energiespeicher versorgt werden.

Diese Energieversorgung wird durch Energieversorgungs-Abschalteinrichtungen 9.1, 9.2 bzw. 9.1', 9.2', beispielsweise Schütze oder Ventile, abgeschaltet, wenn sich die Rotorblätter in einem Trudelstellungsbereich (9.1, 9.1' schalten ab) bzw. Fahnenstellungsbereich (9.2, 9.2' schalten ab) befinden.

Dabei sind im Ausführungsbeispiel zwei Betriebsarten des Sonderbetriebsmodus vorgesehen: bei funktionierender Pitchsteuerung 5 bzw. 5' steuert diese den entsprechenden Verstellantrieb 3 bzw. 3', der dabei aus dem Energiespeicher statt aus der Energiequelle versorgt wird. Bei defekter Pitchsteuerung 5 bzw. 5' wird der entsprechende Verstellantrieb 3 bzw. 3' direkt aus dem Energiespeicher versorgt. In einer nicht dargestellten Abwandlung kann auch eine der beiden Betriebsarten entfallen.

Die Windenergieanlage weist zudem Pitch-Bremsen zum Halten der Rotorblätter sowie redundante Sensoren zum Überwachen der Stellung bzw. Bewegung der Rotorblätter auf, insbesondere eine erste Pitch-Bremse 4 zum Halten des ersten Rotorblatts 2 sowie Sensoren 8.1, 8.2 zum Überwachen des ersten Rotorblatts 2 sowie eine weitere Pitch-Bremse 4' zum Halten des weiteren Rotorblatts 2' sowie Sensoren 8.1', 8.2' zum Überwachen des weiteren Rotorblatts 2'.

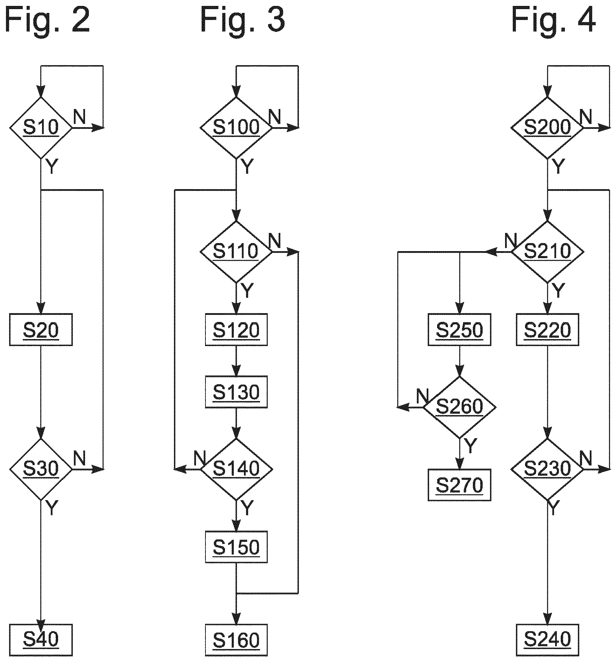

Bei einem in Fig. 2 illustrierten Verfahren zum Betreiben der Windenergieanlage nach bisheriger internen Praxis wird bei einer Störung der Energiequelle 6 (S10: "Y") in einen Störfallbetriebsmodus umgeschaltet, in dem die Verstellantriebe 3, 3' die Rotorblätter 2, 2' bei geöffneten Pitch-Bremsen 4, 4' in ihre Trudel- oder Fahnenstellungen verstellen (Schritt S20), wobei die Energieversorgungs-Abschalteinrichtungen 9.1-9.2' diese Energieversorgung abschalten (S40), sobald das Rotorblatt einen entsprechenden Abschaltbereich erreicht hat (S30: "Y"). Dadurch werden auch die Pitch-Bremsen 4, 4' geschlossen (S40). Somit bilden die entsprechenden Schütze bzw. Ventile gleichermaßen eine Energieversorgungs-Abschalteinrichtung als auch eine Pitch-Bremsschließ-Schalteinrichtung.

Fig. 3 zeigt ein Verfahren zum Betreiben der Windenergieanlage nach einer Ausführung der vorliegenden Erfindung. Wiederum wird bei einer Störung der Energiequelle 6 (S100: "Y") in einen Störfallbetriebsmodus umgeschaltet.

In diesem überwacht eine Sicherheitssteuerung 10 mittels der redundanten Sensoren 8.1-8.2' die Stellung und/oder Bewegung der Rotorblätter 2, 2' (S110).

Solange eine Stellung und/oder Bewegung eines Rotorblatts dabei in einem zulässigen Toleranzbereich um eine vorgegebene Stellung bzw. Bewegung liegt, beispielsweise das Rotorblatt einer vorgegebenen Soll-Bewegung in eine Haltestellung folgt oder sich ein Abstand zu einer vorgegebenen Haltestellung sich (ausreichend schnell) verringert (S110: "Y"), deaktiviert die Sicherheitssteuerung 10 die entsprechende Energieversorgungs-Abschalteinrichtung 9.1 bzw. 9.1' oder gibt eine solche Deaktivierung durch die zugehörige Pitchsteuerung 5, 5' frei (S120).

Bei solcherart deaktivierter Energieversorgungs-Abschalteinrichtung steuert die Pitchsteuerung oder die Sicherheitssteuerung das Rotorblatt in die vorgegebene Haltestellung (S130).

Sobald ein Rotorblatt seine vorgegebene Haltestellung erreicht hat (S140: "Y"), schaltet die Sicherheitssteuerung 10 die Energieversorgung des entsprechenden Verstellantriebs ab (S150) und aktiviert anschließend die entsprechende Energieversorgungs-Abschalteinrichtung oder entzieht der zugehörigen Pitchsteuerung 5, 5' das Schaltrecht bzw. die Freigabe zur Deaktivierung, so dass die Energieversorgungs-Abschalteinrichtung wieder aktiviert wird bzw. ist (S160). Hierdurch wird auch die zugehörige Pitch-Bremse geschlossen (S160).

Falls die Sicherheitssteuerung 10 feststellt, dass die Stellung bzw. Bewegung eines Rotorblatts außerhalb des zulässigen Toleranzbereichs liegt (S110: "N"), aktiviert die Sicherheitssteuerung 10 ebenfalls die entsprechende Energieversorgungs-Abschalteinrichtung 9.1 bzw. 9.1' wieder oder entzieht der zugehörigen Pitchsteuerung 5, 5' das Schaltrecht bzw. die Freigabe zur Deaktivierung.

Man erkennt durch Vergleich mit Fig. 2, dass zum einen die Energieversorgung aus dem Energiespeicher bei regulärem Erreichen der Haltestellung nicht mehr durch die deaktivierte Energieversorgungs-Abschalteinrichtung 9.1 bzw. 9.1' getrennt wird, welche dadurch geschont wird. Zum anderen wird deutlich, dass die Rotorblätter in Haltestellungen innerhalb der vorgegebenen Abschaltbereiche verfahren werden können, solange die Sicherheitssteuerung 10 die Deaktivierung der entsprechenden Energieversorgungs-Abschalteinrichtung bewirkt bzw. freigibt. Dadurch können die Rotorblätter vorteilhaft weiter innerhalb der Abschaltbereiche geparkt und so die Wahrscheinlichkeit eines ungewollten, windinduzierten Herausrutschens reduziert werden.

Fig. 4 zeigt ein Verfahren zum Betreiben der Windenergieanlage nach einer weiteren Ausführung der vorliegenden Erfindung. Wiederum wird bei einer Störung der Energiequelle 6 (S200: "Y") in einen Störfallbetriebsmodus umgeschaltet.

In diesem überwacht die Sicherheitssteuerung 10 mittels der redundanten Sensoren 8.1-8.2' die Stellung und/oder Bewegung der Rotorblätter 2, 2' (S210).

Zudem werden die Rotorblätter in Richtung Trudel- bzw. Fahnenstellung verfahren (S220).

Wenn ein Rotorblatt dabei den entsprechenden Abschaltbereich um diese Stellung erreicht (S230: "Y"), schaltet seine Energieversorgungs-Abschalteinrichtung 9.1 bzw. 9.1' seine Energieversorgung aus dem Energiespeicher ab und schließt seine Pitch-Bremse 4 bzw. 4' (S240), d.h. bildet zugleich eine Pitch-Bremsschließ-Schalteinrichtung.

Falls die Sicherheitssteuerung 10 feststellt, dass die Stellung bzw. Bewegung eines Rotorblatts außerhalb eines zulässigen Toleranzbereichs liegt (S210: "N"), beispielsweise sein Abstand zum anzufahrenden Abschaltbereich sich nicht in vorgesehener Weise verringert, weil beispielsweise der entsprechende Verstellantrieb defekt ist, schließt die Sicherheitssteuerung 10 selber die Pitch-Bremse dieses Rotorblatts und schaltet in einen Sperrmodus, in dem sie ein Öffnen dieser Pitch-Bremse und eine Energieversorgung dieses Verstellantriebs aus dem Energiespeicher unterbindet (S250). Hierzu schaltet die Sicherheitssteuerung 10 zwei Schaltmittel 11.1, 11.2, beispielsweise in der entsprechenden Energieversorgungs-Abschalteinrichtung, wie in der Vergrößerung 1a der Fig. 1 angedeutet. Eine Deaktivierung (S270) dieses Sperrmodus erfordert eine manuelle Eingabe (S260: "Y") individuell für den jeweiligen Verstellantrieb.

Obwohl in der vorhergehenden Beschreibung exemplarische Ausführungen erläutert wurden, sei darauf hingewiesen, dass eine Vielzahl von Abwandlungen möglich ist. So wurden insbesondere anhand der Fig. 3, 4 zwei verschiedene Aspekte der vorliegenden Erfindung getrennt voneinander erläutert. Dies illustriert, dass diese Aspekte unabhängig voneinander verwirklicht sein können. Wie sich aus der Zusammenschau dieser Figuren und der zugehörigen Beschreibung ergibt, können beide Aspekte jedoch auch kombiniert werden, insbesondere also die Sicherheitssteuerung in dem Störfallbetriebsmodus sowohl eine Deaktivierung der Energieversorgungs-Abschalteinrichtung bewirken bzw. freigeben als auch anstelle einer Pitch-Bremsschließ-Schalteinrichtung die entsprechende Pitch-Bremse schließen und dann in den Sperrmodus umschalten. Zudem wurde bereits darauf hingewiesen, dass anstelle blattspezifischer Pitchsteuerungen 5, 5' in einer Abwandlung auch eine (gemeinsame bzw. erste) Pitchsteuerung beide Verstellantriebe 3, 3', in einer Ausführung individuell, steuern kann. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Rotor
- 2/2': erstes/weiteres Rotorblatt
- 3/3': erster/weiterer Verstellantrieb
- 4/4': erste/weitere Pitch-Bremse
- 5/5': erste/weitere Pitchsteuerung
- 6: Energiequelle
- 7/7': Energiespeicher
- 8.1-8.2': Sensor
- 9.1-9.2': Energieversorgungs-Abschalt-/Pitch-Bremsschließ-Schalteinrichtung
- 10: Sicherheitssteuerung
- 11.1, 11.2: Schaltmittel

## Patentansprüche

1. Verfahren zum Betreiben einer Windenergieanlage, welche einen Rotor (1) mit einem ersten winkelverstellbaren Rotorblatt (2), einen ersten Verstellantrieb (3) zum Verstellen des ersten Rotorblatts und eine Sicherheitssteuerung (10) aufweist, wobei:
in einem Normalbetriebsmodus der erste Verstellantrieb aus einer Energiequelle (6) versorgt und durch eine erste Pitchsteuerung (5) gesteuert wird; und
in einem Störfallbetriebsmodus
die Energieversorgung des ersten Verstellantriebs von der Energiequelle auf einen Energiespeicher (7) umgeschaltet ist; und
die Sicherheitssteuerung eine Stellung und/oder Bewegung des ersten Rotorblatts überwacht;
wobei in dem Störfallbetriebsmodus das erste Rotorblatt durch den ersten Verstellantrieb in Richtung einer vorgegebenen Haltestellung verstellt wird, während die Sicherheitssteuerung in Abhängigkeit von der überwachten Stellung und/oder Bewegung eine Deaktivierung einer ersten Energieversorgungs-Abschalteinrichtung (9.1), die dazu eingerichtet ist, die Energieversorgung des ersten Verstellantriebs aus dem Energiespeicher infolge einer Stellung des ersten Rotorblatts in einem Abschaltbereich abzuschalten, freigibt oder bewirkt; und/oder
wobei in dem Störfallbetriebsmodus die Sicherheitssteuerung in Abhängigkeit von der überwachten Stellung und/oder Bewegung anstelle einer Pitch-
Bremsschließ-Schalteinrichtung (9.1), die dazu eingerichtet ist, falls eine Stellung des ersten Rotorblatts in einem Pitch-Bremsschließbereich liegt, eine erste Pitch-Bremse (4) zum Halten des ersten Rotorblatts zu schließen, die erste Pitch-Bremse schließt und einen ersten Sperrmodus aktiviert, in dem die Energieversorgung des ersten Verstellantriebs aus dem Energiespeicher und/oder ein Öffnen der ersten Pitch-Bremse unterbunden ist.

2. Verfahren nach Anspruch 1, **dadurch gekennzeichnet, dass** die Sicherheitssteuerung die Stellung und/oder Bewegung des ersten Rotorblatts redundant, insbesondere mithilfe von wenigstens zwei redundanten Sensoren (8.1, 8.2), überwacht und/oder der erste Verstellantrieb wenigstens einen Elektromotor, insbesondere Gleichstrommotor, oder wenigstens einen Hydraulikaktuator aufweist.

3. Verfahren nach einem der vorhergehenden Ansprüche, **dadurch gekennzeichnet, dass** die Haltestellung innerhalb des Abschaltbereichs liegt und/oder auf Basis eines Zustands der Windenergieanlage und/oder ihrer Umgebung vorgegeben wird.

4. Verfahren nach einem der vorhergehenden Ansprüche, **dadurch gekennzeichnet, dass** die Sicherheitssteuerung nach Erreichen der Haltestellung die Energieversorgung des ersten Verstellantriebs aus dem Energiespeicher abschaltet, bevor sie eine Aktivierung der ersten Energieversorgungs-Abschalteinrichtung freigibt oder bewirkt.

5. Verfahren nach einem der vorhergehenden Ansprüche, **dadurch gekennzeichnet, dass** die Sicherheitssteuerung eine Aktivierung der ersten Energieversorgungs-Abschalteinrichtung freigibt oder bewirkt, falls sie einen Fehler beim Anfahren der Haltestellung mit dem ersten Rotorblatt erfasst.

6. Verfahren nach einem der vorhergehenden Ansprüche, **dadurch gekennzeichnet, dass** der erste Verstellantrieb zum Verstellen des ersten Rotorblatts in Richtung der Haltestellung durch die erste Pitchsteuerung oder die Sicherheitssteuerung gesteuert wird.

7. Verfahren nach einem der vorhergehenden Ansprüche, **dadurch gekennzeichnet, dass** eine zweite Energieversorgungs-Abschalteinrichtung (9.2) die Energieversorgung des ersten Verstellantriebs aus dem Energiespeicher infolge einer Verstellung des ersten Rotorblatts über den ersten Abschaltbereich hinaus in einen zweiten Abschaltbereich hinein abschaltet.

8. Verfahren nach einem der vorhergehenden Ansprüche, **dadurch gekennzeichnet, dass** die Aktivierung des ersten Sperrmodus ein Schalten von wenigstens zwei Schaltmitteln (11.1, 11.2) erfordert und/oder ein Abschalten der Energieversorgung des ersten Verstellantriebs und/oder ein Unterbinden einer Ansteuerung des ersten Verstellantriebs zur Verstellung des ersten Rotorblatts umfasst.

9. Verfahren nach einem der vorhergehenden Ansprüche, **dadurch gekennzeichnet, dass** eine Deaktivierung des ersten Sperrmodus eine individuelle und/oder manuelle Eingabe für den ersten Verstellantrieb erfordert.

10. Verfahren nach einem der vorhergehenden Ansprüche, **dadurch gekennzeichnet, dass** der Rotor wenigstens ein weiteres winkelverstellbares Rotorblatt (2') und einen weiteren Verstellantrieb (3') zum Verstellen dieses weiteren Rotorblatts aufweist, wobei in dem Normalbetriebsmodus der weitere Verstellantrieb aus der Energiequelle versorgt und durch die erste oder eine weitere Pitchsteuerung (5') gesteuert wird; und
in dem Störfallbetriebsmodus
die Energieversorgung des weiteren Verstellantriebs von der Energiequelle auf den oder einen weiteren Energiespeicher (7') umgeschaltet ist; und
die Sicherheitssteuerung eine Stellung und/oder Bewegung des weiteren Rotorblatts überwacht;
wobei in dem Störfallbetriebsmodus das weitere Rotorblatt durch den weiteren Verstellantrieb in Richtung einer vorgegebenen Haltestellung verstellt wird, während die Sicherheitssteuerung in Abhängigkeit von der überwachten Stellung und/oder Bewegung des weiteren Rotorblatts eine Deaktivierung einer weiteren Energieversorgungs-Abschalteinrichtung (9.1'), die dazu eingerichtet ist, die Energieversorgung des weiteren Verstellantriebs aus dem einen bzw. weiteren Energiespeicher infolge einer Stellung des weiteren Rotorblatts in einem Abschaltbereich abzuschalten, freigibt oder bewirkt; und/oder wobei in dem Störfallbetriebsmodus die Sicherheitssteuerung in Abhängigkeit von der überwachten Stellung und/oder Bewegung des weiteren Rotorblatts anstelle einer Pitch-Bremsschließ-Schalteinrichtung (9.1'), die dazu eingerichtet ist, falls eine Stellung des weiteren Rotorblatts in einem Pitch-Bremsschließbereich liegt, eine weitere Pitch-Bremse (4') zum Halten des weiteren Rotorblatts zu schließen, die weitere Pitch-Bremse schließt und einen von dem ersten Sperrmodus unabhängigen weiteren Sperrmodus aktiviert, in dem die Energieversorgung des weiteren Verstellantriebs aus dem einen bzw. weiteren Energiespeicher und/oder ein Öffnen der weiteren Pitch-Bremse unterbunden ist.

11. Windenergieanlage, die einen Rotor (1) mit einem ersten winkelverstellbaren Rotorblatt (2), einen ersten Verstellantrieb (3) zum Verstellen des ersten Rotorblatts und eine Sicherheitssteuerung (10) aufweist, wobei die Windenergieanlage zur Durchführung eines Verfahrens nach einem der vorhergehenden Ansprüche eingerichtet ist und/oder aufweist:
Mittel zum Versorgen des ersten Verstellantriebs aus einer Energiequelle (6) und Steuern durch eine erste Pitchsteuerung (5) in einem Normalbetriebsmodus; und
Mittel zum Umschalten der Energieversorgung des ersten Verstellantriebs von der Energiequelle auf einen Energiespeicher (7) und Überwachen einer Stellung und/oder Bewegung des ersten Rotorblatts durch die Sicherheitssteuerung in einem Störfallbetriebsmodus; sowie
Mittel zum Verstellen des ersten Rotorblatts durch den ersten Verstellantrieb in Richtung einer vorgegebenen Haltestellung, während die Sicherheitssteuerung in Abhängigkeit von der überwachten Stellung und/oder Bewegung eine Deaktivierung einer ersten Energieversorgungs-Abschalteinrichtung (9.1), die dazu eingerichtet ist, die Energieversorgung des ersten Verstellantriebs infolge einer Stellung des ersten Rotorblatts in einem Abschaltbereich abzuschalten, freigibt oder bewirkt, in dem Störfallbetriebsmodus; und/oder
Mittel zum Schließen einer erste Pitch-Bremse (4) zum Halten des ersten Rotorblatts durch die Sicherheitssteuerung in Abhängigkeit von der überwachten Stellung und/oder Bewegung anstelle einer Pitch-Bremsschließ-Schalteinrichtung (9.1), die dazu eingerichtet ist, falls eine Stellung des ersten Rotorblatts in einem Pitch-Bremsschließbereich liegt, die erste Pitch-Bremse zu schließen, und zum Aktivieren eines ersten Sperrmodus, in dem die Energieversorgung des ersten Verstellantriebs und/oder ein Öffnen der ersten Pitch-Bremse unterbunden ist, in dem Störfallbetriebsmodus.

12. Computerprogrammprodukt mit einem Programmcode, der auf einem von einem Computer lesbaren Medium gespeichert ist, zur Durchführung eines Verfahrens nach einem der Ansprüche 1-10.

## Claims

1. A method of operating a wind energy installation which has a rotor (1) with a first rotor blade (2) which can be adjusted in terms of its angle, a first adjustment drive (3) for adjusting the first rotor blade, and a safety control device / system (10), wherein:
in a normal mode of operation, the first adjustment drive is supplied with energy from a source of energy (6) and is controlled by a first pitch control device / system (5); and
in a failure mode of operation
the supply of energy to the first adjustment drive is switched from the source of energy over to an energy storage device (7); and
the safety control device / system monitors a position and / or a movement of the first rotor blade;
wherein, in the failure mode of operation, the first rotor blade is adjusted by means of the first adjustment drive in a direction of a predetermined stopping position, while the safety control device / system, as a function of the monitored position and / or movement,
enables or effects a deactivation of a first power supply shut-off device (9.1), which is set up to cut off the supply of energy to the first adjustment drive from the energy storage device as a result of a position of the first rotor blade in a shut-off range; and / or
wherein, in the failure mode of operation, the safety control device / system, as a function of the monitored position and / or movement, instead of a pitch brake closing switching device (9.1), which is set up to close a first pitch brake (4) for stopping the first rotor blade if a position of the first rotor blade is in a pitch brake closing range, closes the first pitch brake and activates a first blocking mode in which the supply of energy to the first adjustment drive from the energy storage device and / or an opening of the first pitch brake is prevented.

2. The method according to claim 1, **characterized in that** the safety control device / system monitors the position and / or the movement of the first rotor blade in a redundant manner, in particular with the aid of at least two redundant sensors (8.1, 8.2), and / or the first adjustment drive comprises at least one electric motor, in particular a DC motor, or at least one hydraulic actuator.

3. The method according to any one of the preceding claims, **characterized in that** the stopping position is within the shut-off range and / or is specified on the basis of a condition of the wind energy installation and / or its environment.

4. The method according to any one of the preceding claims, **characterized in that**, after the stopping position has been reached, the safety control device / system switches off the supply of energy to the first adjustment drive from the energy storage device before it enables or effects an activation of the first power supply shut-off device.

5. The method according to any one of the preceding claims, **characterized in that** the safety control device / system enables or effects an activation of the first power supply shut-off device if it detects a fault when the stopping position is being approached with the first rotor blade.

6. The method according to any one of the preceding claims, **characterized in that**, for adjusting the first rotor blade in the direction of the stopping position, the first adjustment drive is controlled by the first pitch control device / system or the safety control device / system.

7. The method according to any one of the preceding claims, **characterized in that** a second power supply shut-off device (9.2) shuts off the power supply to the first adjustment drive from the energy storage device as a result of an adjustment of the first rotor blade beyond the first shut-off range into a second shut-off range.

8. The method according to any one of the preceding claims, **characterized in that** the activation of the first blocking mode requires a switching of at least two switching means (11.1, 11.2) and / or comprises a switching off of the supply of energy to the first adjustment drive and / or a prevention of a controlling of the first adjustment drive for adjusting the first rotor blade.

9. The method according to any one of the preceding claims, **characterized in that** a deactivation of the first blocking mode requires an individual and / or a manual input for the first adjustment drive.

10. The method according to any one of the preceding claims, **characterized in that** the rotor comprises at least one further rotor blade (2') which can be adjusted in terms of its angle, and a further adjustment drive (3') for adjusting this further rotor blade, wherein, in the normal mode of operation, the further adjustment drive is supplied with energy from the source of energy and is controlled by the first or a further pitch control device / system (5'); and
in the failure mode of operation
the supply of energy to the further adjustment drive is switched from the source of energy over to the energy storage device or a further energy storage device (7'); and
the safety control device / system monitors a position and / or a movement of the further rotor blade;
wherein, in the failure mode of operation, the further rotor blade is adjusted by means of the further adjustment drive in the direction of a predetermined stopping position, while the safety control device / system, as a function of the monitored position and / or movement of the further rotor blade, enables or effects a deactivation of a further power supply shut-off device (9.1'), which is set up to cut off the supply of energy to the further adjustment drive from the one energy storage device or from the further energy storage device as a result of a position of the further rotor blade in a shut-off range; and / or wherein, in the failure mode of operation, the safety control device / system, as a function of the monitored position and / or movement of the further rotor blade, instead of a pitch brake closing switching device (9.1'), which is set up to close a further pitch brake (4') for stopping the further rotor blade if a position of the further rotor blade is in a pitch brake closing range, closes the further pitch brake and activates a further blocking mode which is independent of the first blocking mode and in which further blocking mode the supply of energy to the further adjustment drive from the one energy storage device or from the further energy storage device and / or an opening of the further pitch brake is prevented.

11. A wind energy installation which comprises a rotor (1) with a first rotor blade (2) which can be adjusted in terms of its angle, a first adjustment drive (3) for adjusting the first rotor blade, and a safety control device / system (10), wherein the wind energy installation is set up for carrying out a method according to any one of the preceding claims, and / or comprises:
means for supplying the first adjustment drive with energy from a source of energy (6) and for controlling the first adjustment drive by means of a first pitch control device / system (5) in a normal mode of operation; and
means for switching the supply of energy to the first adjustment drive from the source of energy over to an energy storage device (7) and for monitoring a position and / or a movement of the first rotor blade by means of the safety control device / system in a failure mode of operation; as well as
means for adjusting the first rotor blade by means of the first adjustment drive in a direction of a predetermined stopping position, while the safety control device / system, as a function of the monitored position and / or movement, enables or effects a deactivation of a first power supply shut-off device (9.1), which is set up to cut off the supply of energy to the first adjustment drive as a result of a position of the first rotor blade in a shut-off range, in the failure mode of operation; and / or
means for closing a first pitch brake (4) for stopping the first rotor blade by means of the safety control device / system as a function of the monitored position and / or movement instead of a pitch brake closing switching device (9.1), which is set up to close the first pitch brake if a position of the first rotor blade is in a pitch brake closing range, and for activating a first blocking mode, in which the supply of energy to the first adjustment drive and / or an opening of the first pitch brake is prevented, in the failure mode of operation.

12. A computer program product comprising a program code which is stored on a computer readable medium, for carrying out a method in accordance with any one of claims 1 to 10.

## Revendications

1. Procédé de fonctionnement d'une éolienne, laquelle présente un rotor (1) avec une première pale de rotor (2) à angle réglable, un premier entraînement de réglage (3) pour régler la première pale de rotor et une commande de sécurité (10), dans lequel :
dans un mode de fonctionnement normal, le premier entraînement de réglage est alimenté à partir d'une source d'énergie (6) et commandé par une première commande de pas variable (5) ; et
dans un mode de fonctionnement en situation de défaillance l'alimentation en énergie du premier entraînement de réglage est basculée de la source d'énergie à un accumulateur d'énergie (7) ; et
la commande de sécurité surveille une position et/ou un mouvement de la première pale de rotor ;
dans lequel, dans le mode de fonctionnement en situation de défaillance, la première pale de rotor est réglée par le premier entraînement de réglage en direction d'une position d'arrêt prédéfinie, tandis que la commande de sécurité, en fonction de la position et/ou du mouvement surveillés, libère ou provoque une désactivation d'un premier dispositif de coupure d'alimentation en énergie (9.1), qui est configuré pour couper l'alimentation en énergie du premier entraînement de réglage à partir de l'accumulateur d'énergie à la suite d'une position de la première pale de rotor dans une zone de coupure ; et/ou dans lequel, dans le mode de fonctionnement en situation de défaillance, la commande de sécurité, en fonction de la position et/ou du mouvement surveillés au lieu d'un dispositif de commutation de fermeture de frein de pas variable (9.1), qui est configuré, si une position de la première pale de rotor se trouve dans une zone de fermeture de frein de pas variable, pour fermer un premier frein de pas variable (4) pour arrêter la première pale de rotor,
ferme le premier frein de pas variable et active un premier mode de blocage, dans lequel l'alimentation en énergie du premier entraînement de réglage à partir de l'accumulateur d'énergie et/ou une ouverture du premier frein de pas variable est empêchée.

2. Procédé selon la revendication 1, **caractérisé en ce que** la commande de sécurité surveille de manière redondante la position et/ou le mouvement de la première pale de rotor, en particulier à l'aide d'au moins deux capteurs redondants (8.1, 8.2), et/ou le premier entraînement de réglage présente au moins un moteur électrique, en particulier un moteur à courant continu, ou au moins un actionneur hydraulique.

3. Procédé selon l'une quelconque des revendications précédentes, **caractérisé en ce que** la position d'arrêt se trouve à l'intérieur de la zone de coupure et/ou est prédéfinie sur la base d'un état de l'éolienne et/ou de son environnement.

4. Procédé selon l'une quelconque des revendications précédentes, **caractérisé en ce que** la commande de sécurité coupe l'alimentation en énergie du premier entraînement de réglage à partir de l'accumulateur d'énergie après avoir atteint la position d'arrêt avant de libérer ou de provoquer une activation du premier dispositif de coupure d'alimentation en énergie.

5. Procédé selon l'une quelconque des revendications précédentes, **caractérisé en ce que** la commande de sécurité libère ou provoque une activation du premier dispositif de coupure d'alimentation en énergie si elle détecte une erreur lors de l'approche de la position d'arrêt avec la première pale de rotor.

6. Procédé selon l'une quelconque des revendications précédentes, **caractérisé en ce que** le premier entraînement de réglage pour le réglage de la première pale de rotor en direction de la position d'arrêt est commandé par la première commande de pas variable ou la commande de sécurité.

7. Procédé selon l'une quelconque des revendications précédentes, **caractérisé en ce qu'**un deuxième dispositif de coupure d'alimentation en énergie (9.2) coupe l'alimentation en énergie du premier entraînement de réglage à partir de l'accumulateur d'énergie à la suite d'un réglage de la première pale de rotor au-delà de la première zone de coupure à l'intérieur d'une deuxième zone de coupure.

8. Procédé selon l'une quelconque des revendications précédentes, **caractérisé en ce que** l'activation du premier mode de blocage nécessite une commutation d'au moins deux moyens de commutation (11.1, 11.2) et/ou une coupure de l'alimentation en énergie du premier entraînement de réglage et/ou une inhibition d'une commande du premier entraînement de réglage pour le réglage de la première pale de rotor.

9. Procédé selon l'une quelconque des revendications précédentes, **caractérisé en ce qu'**une désactivation du premier mode de blocage nécessite une saisie individuelle et/ou manuelle pour le premier entraînement de réglage.

10. Procédé selon l'une quelconque des revendications précédentes, **caractérisé en ce que** le rotor présente au moins une autre pale de rotor (2') réglable en angle et un autre entraînement de réglage (3') pour régler cette autre pale de rotor, dans lequel, dans le mode de fonctionnement normal, l'autre entraînement de réglage est alimenté à partir de la source d'énergie et commandé par la première ou une autre commande de pas variable (5') ; et
dans le mode de fonctionnement en situation de défaillance l'alimentation en énergie de l'autre entraînement de réglage est basculée de la source d'énergie au ou à un autre accumulateur d'énergie (7') ; et
la commande de sécurité surveille une position et/ou un mouvement de l'autre pale de rotor ;
dans lequel, dans le mode de fonctionnement en situation de défaillance, l'autre pale de rotor est réglée par l'autre entraînement de réglage en direction d'une position d'arrêt prédéfinie, tandis que la commande de sécurité, en fonction de la position et/ou du mouvement surveillés de l'autre pale de rotor, libère ou provoque une désactivation d'un autre dispositif de coupure d'alimentation en énergie (9.1'), qui est configuré pour couper l'alimentation en énergie de l'autre entraînement de réglage à partir de l'un ou l'autre accumulateur d'énergie à la suite d'une position de l'autre pale de rotor dans une zone de coupure ; et/ou
dans lequel, dans le mode de fonctionnement en situation de défaillance, la commande de sécurité, en fonction de la position et/ou du mouvement surveillés de l'autre pale de rotor, au lieu d'un dispositif de commutation de fermeture de frein de pas variable (9.1') qui est configuré, si une position de l'autre pale de rotor se trouve dans une zone de fermeture de frein de pas variable, pour fermer un autre frein de pas variable (4') pour arrêter l'autre pale de rotor, ferme l'autre frein de pas variable et active un autre mode de blocage indépendant du premier mode de blocage, dans lequel l'alimentation en énergie de l'autre entraînement de réglage à partir de l'un ou l'autre accumulateur d'énergie et/ou une ouverture de l'autre frein de pas variable est empêchée.

11. Éolienne qui présente un rotor (1) avec une première pale de rotor (2) à angle réglable, un premier entraînement de réglage (3) pour régler la première pale de rotor et une commande de sécurité (10), dans laquelle l'éolienne est configurée pour mettre en œuvre un procédé selon l'une quelconque des revendications précédentes et/ou présente :
des moyens d'alimentation du premier entraînement de réglage à partir d'une source d'énergie (6) et de commande par une première commande de pas variable (5) dans un mode de fonctionnement normal ; et
des moyens de basculement de l'alimentation en énergie du premier entraînement de réglage de la source d'énergie à un accumulateur d'énergie (7) et de surveillance d'une position et/ou
d'un mouvement de la première pale par la commande de sécurité dans un
mode de fonctionnement en situation de défaillance ; et
des moyens de réglage de la première pale de rotor par le premier entraînement de réglage en direction d'une position d'arrêt prédéfinie, tandis que la commande de sécurité, en fonction de la position et/ou du mouvement surveillés, libère ou provoque une désactivation d'un premier dispositif de coupure d'alimentation en énergie (9.1) qui est configuré pour couper l'alimentation en énergie du premier entraînement de réglage à la suite d'une position de la première pale de rotor dans une zone de coupure, dans le mode de fonctionnement en situation de défaillance ; et/ou
des moyens de fermeture d'un premier frein de pas variable (4) pour arrêter la première pale de rotor par la commande de sécurité en fonction de la position et/ou du mouvement surveillés, au lieu d'un dispositif de commutation de fermeture de frein de pas variable (9.1) qui est configuré, si une position de la première pale de rotor se trouve dans une zone de fermeture de frein de pas variable, pour fermer le premier frein de pas variable, et d'activation d'un premier mode de blocage dans lequel l'alimentation en énergie du premier entraînement de réglage et/ou une ouverture du premier frein de pas variable est empêchée, dans le mode de fonctionnement en situation de défaillance.

12. Produit-programme d'ordinateur avec un code de programme qui est enregistré sur un support lisible par un ordinateur pour mettre en œuvre un procédé selon l'une quelconque des revendications 1 à 10.
